# EUROPEAN PATENT APPLICATION

(11) **EP 4 411 338 A1**
(43) Date of publication of application: **07.08.2024**
(21) Application number: 22892497.3
(22) Date of filing: 14.10.2022
(51) Int. Cl.: G01M 15/06, F02D 43/00, F02D 45/00

(54) **CRANKSHAFT PHASE MEASURING DEVICE, CRANKSHAFT PHASE MEASURING METHOD, INTERNAL COMBUSTION ENGINE CONTROL METHOD, CRANKSHAFT, AND INTERNAL COMBUSTION ENGINE**

(30) Priority: 10.11.2021 JP 2021183640; 02.02.2022 JP 2022014902
(71) Applicant: KABUSHIKI KAISHA KOBE SEIKO SHO (KOBE STEEL, LTD.), Hyogo 651-8585 (JP)
(72) Inventor: ARAKI, Kaname, Kobe-shi, Hyogo 651-2271 (JP); MORIMOTO, Tsutomu, Kobe-shi, Hyogo 651-2271 (JP); UEMURA, Shohei, Kobe-shi, Hyogo 651-2271 (JP); TAKISHITA, Takashi, Kobe-shi, Hyogo 651-2271 (JP); MATSUDA, Mariko, Takasago-shi, Hyogo 676-8670 (JP); SHIRAFUJI, Tsukasa, Takasago-shi, Hyogo 676-8670 (JP); OBAYASHI, Yuma, Takasago-shi, Hyogo 676-8670 (JP)
(74) Representative: Müller-Boré & Partner Patentanwälte PartG mbB
(86) International application number: PCT/JP2022/038477
(87) International publication number: WO 2023/084997

(57) **Abstract**

An aspect of the present invention is a crankshaft phase measuring device for measuring a phase of a crankshaft including a plurality of throw portions, the crankshaft phase measuring device including: a plurality of measuring portions for measuring phases of the respective throw portions; a collecting portion for collecting measurement data measured by the plurality of measuring portions; and an analyzing portion for analyzing the measurement data collected by the collecting portion, wherein an electrically and mechanically discontinuous part exists in a part of a measurement path from each throw portion to the collecting portion, and the collecting portion is fixed away from the crankshaft so as not to rotate in synchronization with the crankshaft.

## Description

### [TECHNICAL FIELD]

The present invention relates to a crankshaft phase measuring device, a method for measuring a phase of a crankshaft, a method for controlling an internal combustion engine, a crankshaft, and an internal combustion engine.

### [BACKGROUND ART]

In an internal combustion engine (engine) of an automobile, a ship, or the like, a plurality of pistons move by repeating breathing, compression, explosion, and emission, and a vertical force generated by the compression and the explosion is conveyed to a plurality of throw portions of a crankshaft to be converted into a rotary motion. The throw portions are arranged offset from a rotation central axis of the crankshaft, and fuel consumption fluctuates depending on rotation angles of the throw portions (phase of the crankshaft) at a time of injecting fuel to the pistons. Therefore, a timing of fuel injection is required to be controlled, for example, within an error range of less than or equal to 1°.

To control the timing of fuel injection, it is necessary to measure the phase of the crankshaft. As a method for measuring a phase of a crankshaft, a method utilizing a crankshaft timing rotor (gear) which is installed outside and on the same axis as the crankshaft and rotates in synchronization with the crankshaft is known (for example, see Japanese Unexamined Patent Application, Publication No. 2018-123735).

In the known method for measuring a phase of a crankshaft, signal teeth serving as marks are provided in the gear of the rotor, and the phase of the crankshaft is known by detecting the positions of the signal teeth.

### [PRIOR ART DOCUMENTS]

### [PATENT DOCUMENTS]

Patent Document 1: Japanese Unexamined Patent Application, Publication No. 2018-123735

### [SUMMARY OF THE INVENTION]

### [PROBLEMS TO BE SOLVED BY THE INVENTION]

In the method for measuring a phase of a crankshaft, what is actually measured is a phase of the rotor. Therefore, the phase of the rotor is regarded as the phase of the crankshaft which is directly connected to the rotor, and the phase of each throw portion is obtained according to the structure of the crankshaft.

However, in actual cases, the phase of each throw portion obtained from the phase of the rotor has an error caused by an influence of torsional vibration or a processing error of the crankshaft. Therefore, a method for measuring a phase of a crankshaft with fewer errors is demanded to improve the fuel consumption.

The present invention was made in view of the foregoing circumstances, and an object of the present invention is to provide: a crankshaft phase measuring device which can accurately measure a phase of a throw portion; a method for measuring a phase of a crankshaft, the method using the crankshaft phase measuring device; a method for controlling an internal combustion engine, the method using the method for measuring a phase of a crankshaft; a crankshaft; and an internal combustion engine.

### [MEANS FOR SOLVING THE PROBLEMS]

One aspect of the present invention is a crankshaft phase measuring device for measuring a phase of a crankshaft including a plurality of throw portions, the crankshaft phase measuring device including: a plurality of measuring portions for measuring phases of the respective throw portions; a collecting portion for collecting measurement data measured by the plurality of measuring portions; and an analyzing portion for analyzing the measurement data collected by the collecting portion, wherein an electrically and mechanically discontinuous part exists in a part of a measurement path from each throw portion to the collecting portion, and the collecting portion is fixed away from the crankshaft so as not to rotate in synchronization with the crankshaft.

Since the crankshaft phase measuring device includes the measuring portions which directly measure the phases of the rotating throw portions, the phase of each throw portion can be obtained based on a measurement result of the throw portion. Therefore, the phase of the throw portion can be measured taking into account the influences of torsional vibration and processing errors of the crankshaft; accordingly, the crankshaft phase measuring device can accurately measure the phase of the throw portion. Furthermore, in the crankshaft phase measuring device, the electrically and mechanically discontinuous part exists in the part of the measurement path from each throw portion to the collecting portion, and the collecting portion is fixed away from the crankshaft so as not to rotate in synchronization with the crankshaft. Therefore, the measurement data collected by the collecting portion can be easily retrieved to be utilized, and thus, the crankshaft phase measuring device can be suitably used for controlling the timing of fuel injection to an internal combustion engine.

It is preferable that the plurality of throw portions are housed in a hollow crankcase and that the plurality of measuring portions are arranged in the crankcase. By thus arranging the plurality of measuring portions in the crankcase, an object that interferes the measurement can be eliminated between the throw portions and the measuring portions, whereby measurement accuracy of the phase of the throw portion can be increased.

The collecting portion is preferably disposed outside the crankcase. By thus disposing the collecting portion outside the crankcase, the measurement data collected by the collecting portion can be utilized more easily.

The collecting portion is preferably disposed inside the crankcase. By thus disposing the collecting portion inside the crankcase, which does not rotate in synchronization with the crankshaft, the collection of the measurement data from the plurality of measuring portions arranged inside the crankcase can be facilitated.

It is preferable that the plurality of measuring portions are arranged on an inner face of the crankcase and that the measuring portions and the throw portions are electrically and mechanically discontinuous. In this configuration, the plurality of measuring portions do not rotate in synchronization with the crankshaft, and the rotation of the throw portions is detected in a non-contact manner. Accordingly, the measuring portions and the collecting portion can be connected through signal lines serving as electrical contacts, and thus, the crankshaft phase measuring device can be easily configured.

Each measuring portion preferably includes a proximity sensor for specifying the phase of the throw portion. By using the proximity sensor in the measuring portion, the phase of the throw portion can be easily detected in a non-contact manner.

It is preferable that the measuring portions are arranged on the throw portions, that the measurement data of the plurality of measuring portions are configured to be transmitted via wireless communication from the measuring portions to the collecting portion, and that the measuring portions and the collecting portion are electrically and mechanically discontinuous. In this configuration, the plurality of measuring portions detect the rotation of the throw portions while rotating in synchronization with the crankshaft; therefore, the phases of the throw portions can be sequentially measured. Furthermore, since the wireless communication is used for the transmission of the measurement data, no complex connection configuration is required between the measuring portions, which rotate in synchronization with the crankshaft, and the collecting portion, which does not rotate in synchronization therewith.

It is preferable that at least a part of the crankshaft protrudes from the crankcase, that the crankshaft phase measuring device further includes a relay portion for relaying collecting the measurement data into the collecting portion, that the plurality of measuring portions are arranged on the throw portions, that the relay portion is disposed at a protruding end of the crankshaft, that the measurement data are configured to be transmitted via wireless communication from the relay portion to the collecting portion, and that the relay portion and the collecting portion are electrically and mechanically discontinuous. In this configuration, the plurality of measuring portions detect the rotation of the throw portions, while rotating in synchronization with the crankshaft; therefore, the phases of the throw portions can be sequentially measured. Furthermore, since the relay portion rotates in synchronization with the crankshaft, wired connection between the measuring portions and the relay portion is possible, enabling the measurement data of the plurality of measuring portions to be surely relayed. Moreover, since the relay portion is disposed at the protruding end of the crankshaft which protrudes from the crankcase, the crankcase is less likely to become an obstacle in the wireless communication with the collecting portion disposed outside the crankcase. Accordingly, the collecting portion can stably collect the measurement data measured by the plurality of measuring portions.

Each measuring portion preferably includes: an acceleration sensor for measuring an acceleration at a position where the throw portion is provided; and a gyroscope sensor for measuring an angular velocity. By using the acceleration sensor and the gyroscope sensor in the measuring portion, the phase of the throw portion can be easily detected in all directions.

It is preferable that each measuring portion includes: a detection marker provided on a throw portion of a crankshaft in an internal combustion engine; and a non-contact sensor for detecting the detection marker, that the collecting portion receives detection data detected by the non-contact sensor, and that the analyzing portion is a calculation portion for calculating the detection data. The non-contact sensor can detect a passage start time and a passage end time of the detection marker, and thus, the position of the throw portion can be accurately grasped using the detection data. Accordingly, the phase of the throw portion can be easily detected in a non-contact manner.

Another embodiment of the present invention is a method for measuring a phase of a crankshaft, the method using the crankshaft phase measuring device of the present invention and including: a measuring step of measuring a phase of each throw portion; a collecting step of collecting measurement data measured in the measuring step; and an analyzing step of analyzing the measurement data collected in the collecting step, wherein in the analyzing step, the phase of each throw portion is independently determined according to the measurement data of the throw portion.

In the method for measuring a phase of a crankshaft, the crankshaft phase measuring device of the present invention is used, and the phase of each throw portion is independently obtained based on the measurement result of the throw portion. Accordingly, by using the method for measuring a phase of a crankshaft, the phase of the throw portion in which the influences of torsional vibration and processing errors of the crankshaft are taken into account is measured, and thus, the phase of the throw portion can be accurately measured.

Still another embodiment of the present invention is a method for controlling an internal combustion engine, the method including: a phase-measuring step of measuring a phase of a crankshaft by the method for measuring a phase of a crankshaft of the present invention; and a controlling step of controlling, based on a measurement result of the phase-measuring step, a timing of fuel injection to an engine for driving the crankshaft, wherein the timing control in the controlling step is independently performed for each throw portion based on a phase analysis result of the throw portion.

In the method for controlling an internal combustion engine, based on the phase of the throw portion measured by the method for measuring a phase of a crankshaft of the present invention, in which the influences of torsional vibration and processing errors of the crankshaft are taken into account, the timing of fuel injection is independently controlled for each throw portion. Accordingly, by using the method for controlling an internal combustion engine, the fuel consumption of the internal combustion engine can be improved.

Still another embodiment of the present invention is a method for measuring a phase of a crankshaft by using a crankshaft phase measuring device including: a non-contact sensor for detecting a detection marker provided on a throw portion of a crankshaft in an internal combustion engine; and a calculation portion for calculating by receiving detection data detected by the non-contact sensor, the method including: a step of detecting, by the non-contact sensor, a passage start time and a passage end time of the detection marker; and a step of calculating, by the calculation portion, a passage time of a center of the detection marker from the detection data of the passage start time and the passage end time.

The method for measuring a phase of a crankshaft uses the crankshaft phase measuring device in which the detection marker is provided on the throw portion of the crankshaft and which includes: the non-contact sensor for detecting the detection marker; and the calculation portion for calculating by receiving the detection data detected by the non-contact sensor. The non-contact sensor detects the passage start time and the passage end time of the detection marker. The calculation portion calculates the passage time of the center of the detection marker from the detection data of the passage start time and the passage end time. In this manner, in the method for measuring a phase of a crankshaft, a passage timing of the center of the detection marker is grasped; thus, the position of the throw portion can be accurately grasped. Therefore, the phase of the crankshaft can be measured with high accuracy, and the timing of fuel injection into a cylinder in the internal combustion engine can be easily optimized.

A detectable region of the non-contact sensor is preferably greater than a detected area of the detection marker in a detection direction of the non-contact sensor. This enables the passage start time and the passage end time of the detection marker to be detected with higher accuracy.

It is preferable that the detection marker is formed by metal plating or formed of a metal thin film and is jointed to the crankshaft. This enables the detection marker to be easily provided on the crankshaft.

The detection marker is preferably formed by processing a part of the crankshaft. This enables a simple configuration of the crankshaft phase measuring device.

In a crankshaft according to still another embodiment of the present invention, a throw portion is provided with a detection marker for measuring a phase.

In the crankshaft, since the detection marker is provided and the position of the throw portion is detected with high accuracy, the phase can be easily measured.

In an internal combustion engine according to still another embodiment of the present invention, the crankshaft is provided in a crankcase, and the internal combustion engine includes: a non-contact sensor for detecting the detection marker; a calculation portion for calculating by receiving detection data detected by the non-contact sensor; and a control portion which commands, based on a calculation result of the calculation portion, a fuel injector to inject fuel.

In the internal combustion engine, the crankshaft is provided, and the fuel can be injected at a suitable timing while the phase of the crankshaft is accurately measured; thus, a fuel consumption rate can be improved.

### [EFFECTS OF THE INVENTION]

As described above, according to the crankshaft phase measuring device and the method for measuring a phase of a crankshaft of the present invention, the phase of the throw portion can be accurately measured. Furthermore, the method for measuring a phase of a crankshaft of the present invention is used in the method for controlling an internal combustion engine of the present invention, and thus, the fuel consumption of the internal combustion engine can be improved. In the crankshaft of the present invention, since the detection marker is provided and the position of the throw portion is detected with high accuracy, the phase can be accurately measured. In the internal combustion engine of the present invention, the fuel can be injected at a suitable timing while the phase of the crankshaft is accurately measured; thus, the fuel consumption rate can be improved.

### [BRIEF DESCRIPTION OF THE DRAWINGS]

FIG. 1 is a schematic configuration diagram of a crankshaft phase measuring device according to one embodiment of the present invention.
FIG. 2 is a flowchart illustrating a method for measuring a phase of a crankshaft according to one embodiment of the present invention.
FIG. 3 is an explanatory diagram illustrating an example of a method for analyzing the phase of one throw portion in the analyzing step in FIG. 2.
FIG. 4 is a flowchart illustrating a method for controlling an internal combustion engine according to one embodiment of the present invention.
FIG. 5 is an explanatory diagram illustrating an example of the timing of fuel injection in the controlling step in FIG. 4.
FIG. 6 is a schematic configuration diagram of a crankshaft phase measuring device according to an embodiment different from the embodiment in FIG. 1.
FIG. 7 is a schematic configuration diagram of a crankshaft phase measuring device according to an embodiment different from the embodiments in FIGs. 1 and 6.
FIG. 8 is a schematic configuration diagram of a crankshaft phase measuring device according to an embodiment different from the embodiments in FIGs. 1, 6, and 7.
FIG. 9 is a schematic configuration diagram of a crankshaft phase measuring device according to an embodiment different from the embodiments in FIGs. 1, 6, 7, and 8.
FIG. 10 is a schematic enlarged view of a throw portion included in the crankshaft in FIG. 9.
FIG. 11 is a schematic left side view of the throw portion in FIG. 10.
FIG. 12 is a flowchart illustrating a method for measuring a phase of a crankshaft according to an embodiment different from the embodiment in FIG. 2.
FIG. 13 is a flowchart illustrating details of the calculating step in FIG. 12.
FIG. 14 is a graph showing that a sensor potential of a non-contact sensor changes when a throw portion approaches the non-contact sensor.
FIG. 15 is a graph showing that a sensor potential of a non-contact sensor changes when a detection marker approaches the non-contact sensor.
FIG. 16 is a graph showing calculation results of the passage timing of the center of the detection marker.

### [DESCRIPTION OF EMBODIMENTS]

### First Embodiment

Hereinafter, a crankshaft phase measuring device, a method for measuring a phase of a crankshaft, and a method for controlling an internal combustion engine according to a first embodiment of the present invention are described.

### Crankshaft Phase Measuring Device

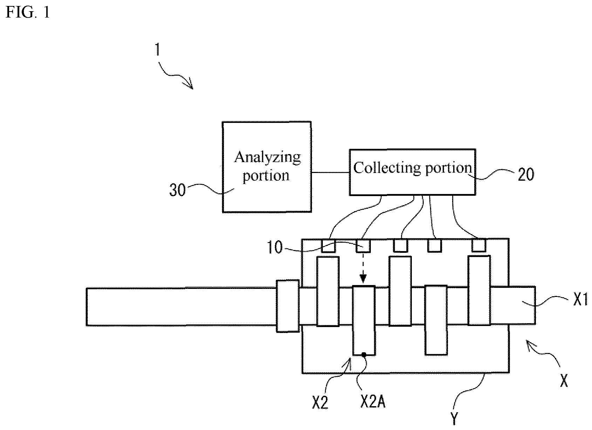

A crankshaft phase measuring device 1 illustrated in FIG. 1 is a device for measuring a phase of a crankshaft X and includes measuring portions 10, a collecting portion 20, and an analyzing portion 30.

### Crankshaft

The crankshaft X includes: a shaft X1 which constitutes a rotation central axis; and a plurality of throw portions X2.

As illustrated in FIG. 1, at least a part of the shaft X1 protrudes from a crankcase Y. In other words, at least a part of the crankshaft X protrudes from the crankcase Y

The plurality of throw portions X2 are arranged offset from the rotation central axis. Specifically, each throw portion X2 includes: a pair of crank arms arranged on the rotation central axis; and a crankpin connected between the pair of crank arms and disposed parallel to the rotation central axis, wherein the crankpin is at an offset position. Furthermore, a connecting rod (not illustrated) is attached to the crankpin and connected to a piston. Although FIG. 1 illustrates, as an example, the case in which five throw portions X2 are provided, the number of throw portions X2 is not limited to five.

Furthermore, the plurality of throw portions X2 are housed in the hollow crankcase Y. In other words, the throw portions X2 are arranged to be spaced apart from an inner face of the crankcase Y.

### Measuring Portions

The plurality of measuring portions 10 measure phases of the respective throw portions X2. The measuring portions 10 are provided for the respective throw portions X2 on a one-to-one basis, and the number of measuring portions 10 agrees with the number of throw portions X2.

The plurality of measuring portions 10 are arranged inside the crankcase Y By thus arranging the plurality of measuring portions 10 inside the crankcase Y, an object that interferes the measurement can be eliminated between the throw portions X2 and the measuring portions 10, whereby the measurement accuracy of the phases of the throw portions X2 can be increased.

In the crankshaft phase measuring device 1, the plurality of measuring portions 10 are arranged on the inner face of the crankcase Y, and the measuring portions 10 and the throw portions X2 are electrically and mechanically discontinuous. In other words, an electrically and mechanically discontinuous part exists in a part of a measurement path from each throw portion X2 to the collecting portion 20.

Specifically, the measuring portions 10 are arranged to be spaced apart from the throw portions X2 and detect the rotation of the throw portions X2 in a non-contact manner. Furthermore, in this configuration, the plurality of measuring portions 10 do not rotate in synchronization with the crankshaft X. Accordingly, all of the measuring portions 10, the collecting portion 20, and the analyzing portion 30 can be configured not to rotate, and thus, the crankshaft phase measuring device 1 can be easily configured.

As a means for detecting the rotation of each throw portion X2 in a non-contact manner, for example, a proximity sensor may be used. In other words, each measuring portion 10 includes a proximity sensor for specifying the phase of the throw portion X2. Since the throw portion X2 is disposed offset from the rotation central axis, a distance between the measuring portion 10 and the throw portion X2 changes depending on the phase of the throw portion X2. Therefore, as illustrated in FIG. 1, when the measuring portion 10 observes one point (tip part of the arrow in FIG. 1) of the throw portion X2 by using the proximity sensor, the distance to the throw portion X2 is the shortest at a proximity point X2A. For example, the measuring portion 10 can specify a passage timing of the proximity point X2A, and can specify the phase of the throw portion X2 by using the proximity point X2A as a starting point.

In the crankshaft phase measuring device 1, the measuring portions 10 arranged on the inner face of the crankcase Y and the collecting portion 20 (details are described later) disposed outside the crankcase Y are connected through signal lines each serving as an electrical contact. In this case, even when the crankcase Y is made of metal, measurement data measured by the measuring portions 10 can be transmitted to the collecting portion 20.

### Collecting Portion

The collecting portion 20 collects the measurement data collected by the plurality of measuring portions 10. The collecting portion 20 is fixed away from the crankshaft X so as not to rotate in synchronization with the crankshaft X.

In the crankshaft phase measuring device 1, the collecting portion 20 is disposed outside the crankcase Y By thus disposing the collecting portion 20 outside the crankcase Y, the collecting portion 20 can be easily accessed, whereby the measurement data collected by the collecting portion 20 can be easily utilized.

### Analyzing Portion

The analyzing portion 30 analyzes the measurement data collected by the collecting portion 20. Through the analysis in the analyzing portion 30, the phase of each throw portion X2 is determined from the measurement data of the throw portion X2.

As in the case of the collecting portion 20, the analyzing portion 30 is fixed away from the crankshaft X so as not to rotate in synchronization with the crankshaft X. The analyzing portion 30 may be constituted by, for example, an arithmetic device such as a CPU, a display device, and the like. A method for determining the phase of the throw portion X2 is described later in Method for Measuring Phase of Crankshaft.

The analyzed phase of the throw portion X2 may be displayed on the display device. Furthermore, for example, the analyzed phase of the throw portion X2 is transmitted in real time to a control portion (not illustrated) for controlling the timing of fuel injection to an engine that drives the crankshaft X. It is to be noted that "to transmit in real time" as referred to herein includes a case of performing transmitting operations at predetermined intervals, and the predetermined interval is less than or equal to 0.2 msec and preferably less than or equal to 0.1 msec.

### Advantages

Since the crankshaft phase measuring device 1 includes the measuring portions 10 which directly measure the phases of the throw portions X2 which are rotating, the phase of each throw portion X2 can be obtained based on the measurement result of the throw portion X2. Therefore, the phase of the throw portion X2 can be measured taking into account the influences of torsional vibration and processing errors of the crankshaft X, and thus, the crankshaft phase measuring device 1 can accurately measure the phase of the throw portion X2. Furthermore, in the crankshaft phase measuring device 1, the electrically and mechanically discontinuous part exists in the part of the measurement path from each throw portion X2 to the collecting portion 20, and the collecting portion 20 is fixed away from the crankshaft X so as not to rotate in synchronization with the crankshaft X. Therefore, the measurement data collected by the collecting portion 20 can be easily retrieved to be utilized, and thus, the crankshaft phase measuring device 1 can be suitably used for controlling the timing of fuel injection to an internal combustion engine.

### Method for Measuring Phase of Crankshaft

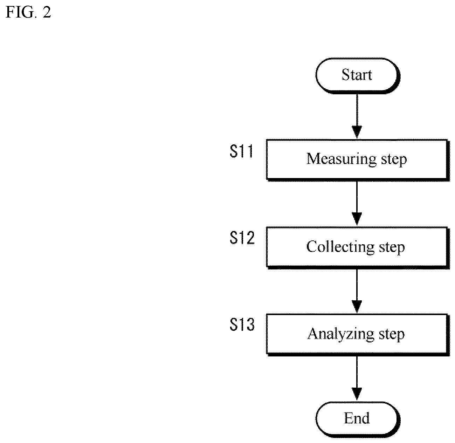

The method for measuring a phase of a crankshaft illustrated in FIG. 2 uses the crankshaft phase measuring device 1 illustrated in FIG. 1. The method for measuring a phase of a crankshaft includes a measuring step S11, a collecting step S12, and an analyzing step S13.

### Measuring Step

In the measuring step S11, the phase of each throw portion X2 is measured. This step is performed using the measuring portions 10.

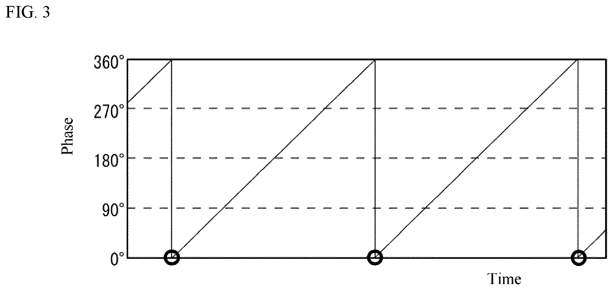

In the crankshaft phase measuring device 1, since the proximity sensor is used in each measuring portion 10, the timing of closest approach of the proximity point X2A of the throw portion X2 to the measuring portion 10 can be found. When this timing is defined as a starting point (0°) of the phase, the position of the phase 0° is intermittently extracted as indicated by the circles in FIG. 3.

### Collecting Step

In the collecting step S12, measurement data measured in the measuring step S11 are collected. This step is performed using the collecting portion 20.

In the crankshaft phase measuring device 1, the plurality of measuring portions 10 and the collecting portion 20 are connected through the signal lines each serving as an electrical contact. Via these signal lines, the collecting portion 20 can collect the measurement data measured by the plurality of measuring portions 10.

### Analyzing Step

In the analyzing step S13, the measurement data collected in the collecting step S12 are analyzed. This step is performed using the analyzing portion 30.

Specifically, the following procedure is conducted. When it is assumed that the crankshaft X moves at a constant angular velocity, the analyzing portion 30 can estimate, based on the measurement data (the circles in FIG. 3), the phase of the throw portion X2 as shown by the solid line in FIG. 3.

In the analyzing step S13, the phase of each throw portion X2 is independently determined from the measurement data of the throw portion X2. By independently determining the phase of each throw portion X2, the influences of torsional vibration and processing errors of the crankshaft X, the influences being superimposed on the measurement results of the other throw portions X2 can be minimized.

### Advantages

The method for measuring a phase of a crankshaft uses the crankshaft phase measuring device 1 of the present invention, and the phase of each throw portion X2 is independently determined based on the measurement result of the throw portion X2. Accordingly, by using the method for measuring a phase of a crankshaft, the phase of the throw portion X2, in which the influences of torsional vibration and processing errors of the crankshaft X are taken into account, is measured, and thus, the phase of the throw portion X2 can be accurately measured.

### Method for Controlling Internal Combustion Engine

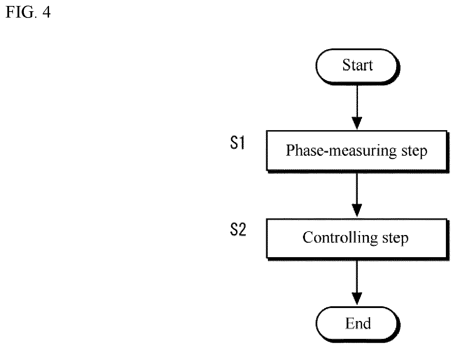

The method for controlling an internal combustion engine illustrated in FIG. 4 includes a phase-measuring step S1 and a controlling step S2.

### Phase-Measuring Step

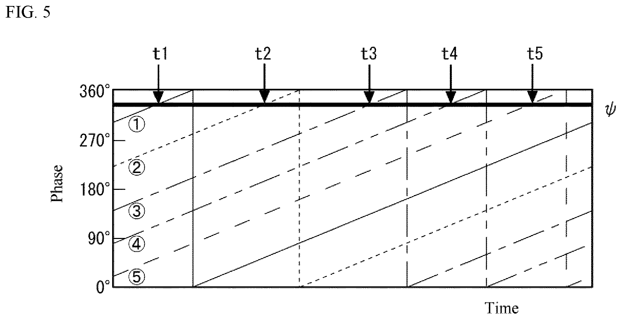

In the phase-measuring step S1, the phase of the crankshaft X is measured. In the phase-measuring step S1, the above-described method for measuring a phase of a crankshaft of the present invention is used, and as illustrated in FIG. 5, the phase of each throw portion X2 is independently determined. It is to be noted that FIG. 5 illustrates the case in which the number of throw portions X2 is five as in the crankshaft phase measuring device 1 illustrated in FIG. 1; however, the number of throw portions X2 is not limited to five.

### Controlling Step

In the controlling step S2, the timing of fuel injection to the engine that drives the crankshaft X is controlled based on measurement results in the phase-measuring step S1.

The timing control in the controlling step S2 is independently performed for each throw portion X2, based on a phase analysis result of each throw portion X2. Specifically, as illustrated in FIG. 5, the fuel injection to each throw portion X2 is performed at timings t1 to t5 at which the phase of the throw portion X2 agrees with an optimal phase ψ of fuel injection.

### Advantages

In the method for controlling an internal combustion engine, the timing of fuel injection is independently controlled for each throw portion X2, based on the phase of the throw portion X2, which is measured by the method for measuring a phase of a crankshaft of the present invention and in which the influences of torsional vibration and processing errors of the crankshaft X are taken into account. Accordingly, by using the method for controlling an internal combustion engine, the fuel consumption of the internal combustion engine can be improved.

### Second Embodiment

Hereinafter, a crankshaft phase measuring device and a method for measuring a phase of a crankshaft according to a second embodiment of the present invention are described. It is to be noted that a method for controlling an internal combustion engine, the method using the crankshaft phase measuring device and the method for measuring a phase of a crankshaft according to the second embodiment, is similar to the method for controlling an internal combustion engine of the first embodiment, and thus, detailed description thereof is omitted.

### Crankshaft Phase Measuring Device

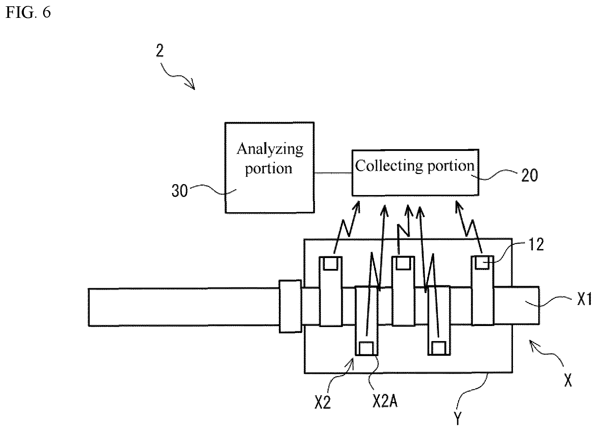

A crankshaft phase measuring device 2 illustrated in FIG. 6 is a crankshaft phase measuring device for measuring the phase of the crankshaft X including the plurality of throw portions X2 and includes: a plurality of measuring portions 12 for measuring the phases of the respective throw portions X2; the collecting portion 20 for collecting measurement data measured by the plurality of measuring portions 12; and the analyzing portion 30 for analyzing the measurement data collected by the collecting portion 20, wherein an electrically and mechanically discontinuous part exists in a part of a measurement path from each throw portion X2 to the collecting portion 20, and the collecting portion 20 is fixed away from the crankshaft X so as not to rotate in synchronization with the crankshaft X.

Except for the measuring portions 12, components of the crankshaft phase measuring device 2 illustrated in FIG. 6 are similar to those of the crankshaft phase measuring device 1 illustrated in FIG. 1; therefore, the same reference symbols are assigned to these components, and detailed description thereof is omitted.

### Measuring Portions

In the crankshaft phase measuring device 2, the plurality of measuring portions 12 are arranged inside the crankcase Y. Specifically, the measuring portions 12 are arranged on the throw portions X2, the measurement data of the plurality of measuring portions 12 are configured to be transmitted via wireless communication from the measuring portions 12 to the collecting portion 20, and the measuring portions 12 and the collecting portion 20 are electrically and mechanically discontinuous.

As a means for measuring the phase of the throw portion X2, the means being disposed on the throw portion X2, for example, an acceleration sensor and a gyroscope sensor may be used in combination. In other words, each measuring portion 12 includes: an acceleration sensor for measuring an acceleration at a position where the throw portion X2 is provided; and a gyroscope sensor for measuring an angular velocity. By simultaneously analyzing outputs of the acceleration sensor and the gyroscope sensor, the tilt and position thereof can be specified. Accordingly, by using the acceleration sensor and the gyroscope sensor in the measuring portion 12, the phase of the throw portion X2 can be easily detected in all directions.

A position where the measuring portion 12 is provided is preferably a farthest point from a rotation axis of the crankshaft X, the farthest point being on the throw portion X2. A change in the acceleration is maximized at the farthest point, and thus, the detection accuracy of the phase of the throw portion X2 can be easily increased. Furthermore, in light of the detection accuracy, the measuring portion 12 is preferably provided on a side face of the connecting rod attached to the crankpin of the throw portion X2. Alternatively, the measuring portion 12 may be provided on a back chamfer portion of the crankpin.

As the wireless communication, a known wireless interface such as WiFi, BlueTooth, or the like may be used.

Furthermore, in the crankshaft phase measuring device 2, since the wireless communication is performed in and out of the crankcase Y, a material capable of wireless communication needs to be selected for the crankcase Y. Specifically, it is necessary to avoid using a metal or the like having a fixed potential.

### Advantages

In the crankshaft phase measuring device 2, the plurality of measuring portions 12 detect the rotation of the throw portions X2, while rotating in synchronization with the crankshaft X; therefore, the phases of the throw portions X2 can be sequentially measured. Furthermore, since the wireless communication is used for the transmission of the measurement data, no complex connection configuration is required between the measuring portions 12, which rotate in synchronization with the crankshaft X, and the collecting portion 20, which does not rotate in synchronization therewith.

### Method for Measuring Phase of Crankshaft

As illustrated in FIG. 2, the method for measuring a phase of a crankshaft using the crankshaft phase measuring device 2 illustrated in FIG. 6 includes: the measuring step S11 of measuring the phase of each throw portion X2; the collecting step S12 of collecting the measurement data measured in the measuring step S11; and the analyzing step S13 of analyzing the measurement data collected in the collecting step S12, wherein in the analyzing step S13, the phase of each throw portion X2 is independently determined from the measurement data of the throw portion X2.

In the method for measuring a phase of a crankshaft, the crankshaft phase measuring device 2 illustrated in FIG. 6 is used; therefore, in the measuring step S11, the phases of the throw portions X2 can be sequentially obtained in real time. Accordingly, it is unnecessary to estimate the phases of the throw portions X2 in the analyzing step S13 based on the measurement data.

Except for the above-described points, the method for measuring a phase of a crankshaft is similar to the method for measuring a phase of a crankshaft according to the first embodiment, and thus, the other description is omitted.

### Third Embodiment

Hereinafter, a crankshaft phase measuring device according to a third embodiment of the present invention is described. It is to be noted that a method for measuring a phase of a crankshaft and a method for controlling an internal combustion engine which use the crankshaft phase measuring device according to the third embodiment are similar to the method for measuring a phase of a crankshaft of the second embodiment and the method for controlling an internal combustion engine of the second embodiment, respectively, and thus, detailed description thereof is omitted.

### Crankshaft Phase Measuring Device

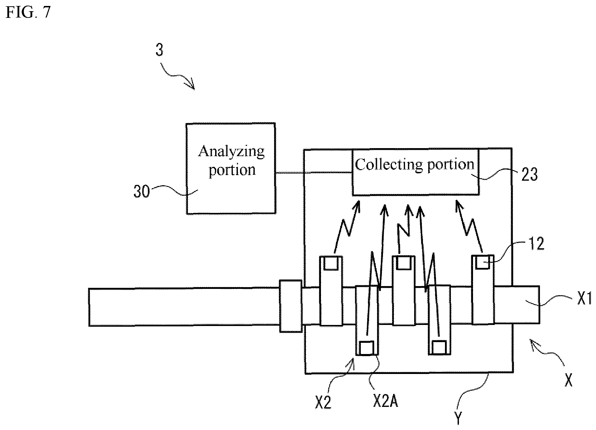

A crankshaft phase measuring device 3 illustrated in FIG. 7 is a crankshaft phase measuring device for measuring the phase of the crankshaft X including the plurality of throw portions X2 and includes: the plurality of measuring portions 12 for measuring the phase of each throw portion X2; a collecting portion 23 for collecting the measurement data measured by the plurality of measuring portions 12; and the analyzing portion 30 for analyzing the measurement data collected by the collecting portion 23, wherein an electrically and mechanically discontinuous part exists in a part of a measurement path from each throw portion X2 to the collecting portion 23, and the collecting portion 23 is fixed away from the crankshaft X so as not to rotate in synchronization with the crankshaft X.

Except for the collecting portion 23, components of the crankshaft phase measuring device 3 illustrated in FIG. 7 are similar to those of the crankshaft phase measuring device 2 illustrated in FIG. 6; therefore, the same reference symbols are assigned to these components, and detailed description thereof is omitted.

### Collecting Portion

In the crankshaft phase measuring device 3, the collecting portion 23 is disposed inside the crankcase Y Although the collecting portion 23 may be disposed on a beam, a rib, or the like in the crankcase Y, in light of easiness of the wireless communication with the measuring portions 10, the collecting portion 23 is preferably disposed on the inner face of the crankcase Y

Except for the above-described points, the collecting portion 23 is similar to the collecting portion 20 according to the second embodiment, and thus, the other description is omitted.

It is to be noted that in the crankshaft phase measuring device 3, the wireless communication is limited inside the crankcase Y; therefore, there is no limitation on the material of the crankcase Y, and for example, a metal may be used.

### Advantages

In the crankshaft phase measuring device 3, by disposing the collecting portion 23 inside the crankcase Y, which does not rotate in synchronization with the crankshaft X, the collection of the measurement data from the plurality of measuring portions 12 arranged inside the crankcase Y can be facilitated.

### Fourth Embodiment

Hereinafter, a crankshaft phase measuring device according to a fourth embodiment of the present invention is described. It is to be noted that a method for measuring a phase of a crankshaft and a method for controlling an internal combustion engine which use the crankshaft phase measuring device according to the fourth embodiment are similar to the method for measuring a phase of a crankshaft of the second embodiment and the method for controlling an internal combustion engine of the second embodiment, respectively, and thus, detailed description thereof is omitted.

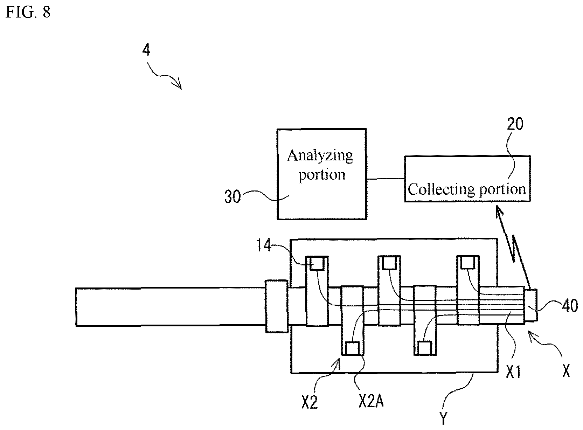

A crankshaft phase measuring device 4 illustrated in FIG. 8 is a crankshaft phase measuring device for measuring the phase of the crankshaft X including the plurality of throw portions X2 and includes: a plurality of measuring portions 14 for measuring the phase of each throw portion X2; the collecting portion 20 for collecting measurement data measured by the plurality of measuring portions 14; and the analyzing portion 30 for analyzing the measurement data collected by the collecting portion 20, wherein an electrically and mechanically discontinuous part exists in a part of a measurement path from each throw portion X2 to the collecting portion 20, and the collecting portion 20 is fixed away from the crankshaft X so as not to rotate in synchronization with the crankshaft X. Furthermore, the crankshaft phase measuring device 4 further includes a relay portion 40 for relaying collecting the measurement data into the collecting portion 20.

The collecting portion 20 and the analyzing portion 30 of the crankshaft phase measuring device 4 illustrated in FIG. 8 are similar to those of the crankshaft phase measuring device 2 illustrated in FIG. 6; therefore, the same reference symbols are assigned, and detailed description thereof is omitted.

### Measuring Portions

The plurality of measuring portions 14 are arranged on the throw portions X2. Although wireless communication may be employed between the plurality of measuring portions 14 and the relay portion 40, these are preferably connected through signal lines serving as electrical contacts. By thus connecting through the signal lines, the measurement data can be stably transmitted. Furthermore, since both the plurality of measuring portions 14 and the relay portion 40 described later rotate in synchronization with the crankshaft X, these can be easily connected through the signal lines.

Except for the above-described points, the measuring portions 14 are similar to the measuring portions 12 according to the second embodiment, and thus, the other description is omitted.

### Relay Portion

The relay portion 40 is disposed at a protruding end of the shaft X1. In other words, the relay portion 40 rotates in synchronization with the crankshaft X.

The relay portion 40 receives the measurement data from the plurality of measuring portions 14 and transmits the measurement data directly to the collecting portion 20. The measurement data are transmitted via wireless communication from the relay portion 40 to the collecting portion 20. In other words, in the crankshaft phase measuring device 4, on the measurement path from each throw portion X2 to the collecting portion 20, the relay portion 40 and the collecting portion 20 are electrically and mechanically discontinuous.

As the wireless communication between the relay portion 40 and the collecting portion 20, wireless communication similar to that described in the second embodiment may be used.

It is to be noted that in the crankshaft phase measuring device 4, the wireless communication is limited outside the crankcase Y; therefore, there is no limitation on the material of the crankcase Y, and for example, a metal may be used.

### Advantages

In the crankshaft phase measuring device 4, the plurality of measuring portions 14 detect the rotation of the throw portions X2, while rotating in synchronization with the crankshaft X; therefore, the phases of the throw portions X2 can be sequentially measured. Furthermore, since the relay portion 40 rotates in synchronization with the crankshaft X, wired connection between the measuring portions 14 and the relay portion 40 is possible, enabling the measurement data of the plurality of measuring portions 14 to be surely relayed. Moreover, since the relay portion 40 is disposed at the protruding end of the crankshaft X which protrudes from the crankcase Y, the crankcase Y is less likely to become an obstacle in the wireless communication with the collecting portion 20 disposed outside the crankcase Y. Accordingly, the collecting portion 20 can stably collect the measurement data measured by the plurality of measuring portions 14.

### Fifth Embodiment

Hereinafter, a crankshaft phase measuring device, a method for measuring a phase of a crankshaft, a crankshaft, and an internal combustion engine according to a fifth embodiment of the present invention are described.

### Crankshaft Phase Measuring Device

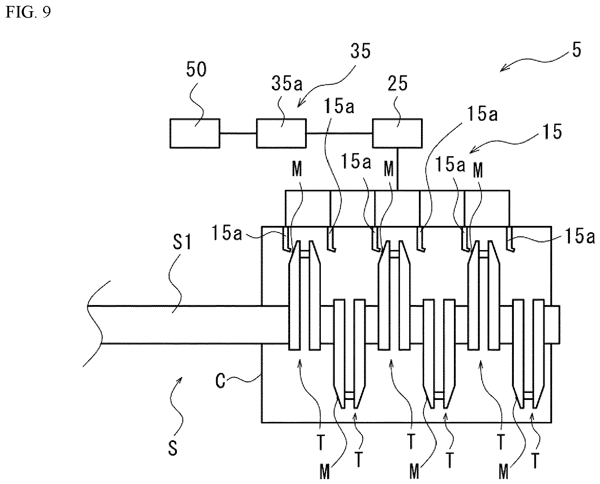

A crankshaft phase measuring device 5 illustrated in FIG. 9 is a crankshaft phase measuring device for measuring a phase of a crankshaft S including a plurality of throw portions T and includes: a plurality of measuring portions 15 for measuring phases of the respective throw portions T; a collecting portion 25 for collecting measurement data measured by the plurality of measuring portions 15; and an analyzing portion 35 for analyzing the measurement data collected by the collecting portion 25, wherein an electrically and mechanically discontinuous part exist in a part of a measurement path from each throw portion T to the collecting portion 25, and the collecting portion 25 is fixed away from the crankshaft S so as not to rotate in synchronization with the crankshaft S.

Each measuring portion 15 includes: a detection marker M provided on the throw portion T of the crankshaft S in an internal combustion engine; and a non-contact sensor 15a for detecting the detection marker M, the collecting portion 25 receives detection data detected by the non-contact sensor 15a, and the analyzing portion 35 is a calculation portion 35a for calculating the detection data.

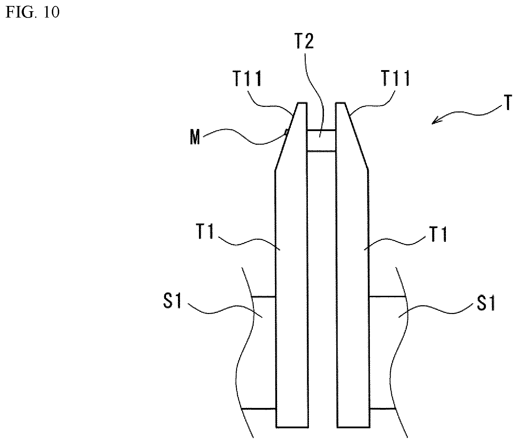

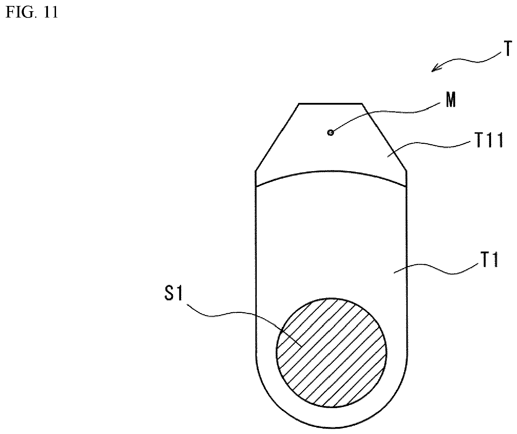

As illustrated in FIGs. 9, 10, and 11, the crankshaft phase measuring device 5 is a device for measuring the phase of the crankshaft S in the internal combustion engine, which is not entirely illustrated, and includes the non-contact sensors 15a and the calculation portion 35a. The crankshaft S is one of members that constitute the internal combustion engine. The crankshaft S is a rotation axis, and a rotary motion of the crankshaft S is delivered to wheels of a vehicle, a screw of a ship, or the like to generate a propulsion force of the vehicle, the ship, or the like. That is to say, the crankshaft S is an output shaft. It is to be noted that each member (each component) in each drawing illustrating the crankshaft phase measuring device 5 is schematically illustrated, and the shape and scale thereof may be different from those of an actual member.

A part of the crankshaft S is housed in a crankcase C which constitutes a part of the internal combustion engine. This part is provided with the throw portions T (crank throws). That is to say, the crankshaft S includes a shaft S1 and the throw portions T. In this embodiment, six throw portions T are provided. The six throw portions T are provided at substantially equal intervals in an axial direction of the crankshaft S, and provided at substantially equal angular intervals when viewed from the axial direction of the crankshaft S. One throw portion T and another throw portion T adjacent to the one throw portion T are connected by the shaft S 1. The number of throw portions T is not limited to six and varies depending on the configuration of the internal combustion engine.

Each throw portion T has a cylindrical shape and includes: a crankpin T2 which has an axial direction parallel to the axial direction of the crankshaft S and is disposed offset; and substantially plate-shaped pair of crank arms T1 for holding the crankpin T2. On a tip side (end side apart from the crankshaft S) of each crank arm T1 and on a face (outer face) opposite to a side on which the crankpin T2 is held, a back chamfer portion T11 with a thickness gradually decreasing toward the tip side is formed. A connecting rod (not illustrated) is attached to the crankpin T2, and the connecting rod is connected to a piston (not illustrated). The piston reciprocates in a cylinder (not illustrated) and gives a rotary motion to the crankshaft S by rotating the throw portion T through the connecting rod. The connecting rod, the piston, and the cylinder are each a part of the internal combustion engine.

The detection marker M is provided on each throw portion T. A position where the detection marker M is provided is not particularly limited, and in this embodiment, the detection marker M is provided substantially in the middle of the back chamfer portion T11 in one of the crank arms T1 of the throw portion T.

The non-contact sensor 15a detects the detection marker M. The non-contact sensor 15a of this embodiment is a proximity sensor and is disposed inside the crankcase C so as to approach the corresponding detection marker M. The non-contact sensor 15a detects a passage start time and a passage end time of the detection marker M. That is to say, the detection of the detection marker M by the non-contact sensor 15a is started when the detection marker M enters a detection range of the non-contact sensor 15a, and ended when the detection marker M leaves the detection range of the non-contact sensor 15a.

The detection marker M is not particularly limited as long as it can be detected by the non-contact sensor 15a, and is preferably one that is formed by metal plating or formed of a metal thin film and can be jointed to the crankshaft S. The metal is preferably different from a material of the crank arm T1, and examples of the metal include copper, aluminum, and the like. The non-contact sensor 15a is not particularly limited as long as it can detect the detection marker M; when the detection marker M is formed by metal plating or formed of a metal thin film, for example, an eddy current displacement sensor may be used.

A shape of the detection marker M is not particularly limited and may be a circle, an ellipse, a triangle, a rectangle, or a polygon. A size (detected area) of the detection marker M in a plan view is not particularly limited and is preferably less than or equal to the detection range (area of a detectable region) of the non-contact sensor 15a. In other words, the detectable region of the non-contact sensor 15a is preferably greater than the detected area of the detection marker M in the detection direction of the non-contact sensor 15a.

When the detection marker M is too large with respect to the detection range of the non-contact sensor 15a, a sensor output of the non-contact sensor 15a may be saturated, making it difficult to accurately grasp a passage timing of a center of the detection marker M. On the other hand, when the detection marker M is too small, a change in the sensor output of the non-contact sensor 15a may become small, making the detection of the detection marker M unstable. Therefore, the size of the detection marker M is preferably determined to be smaller than the detection range of the non-contact sensor 15a and to have an area which enables obtaining a sufficiently high sensor output with respect to noises superimposed on the non-contact sensor 15a in an environment where the detection is conducted.

The collecting portion 25 receives the detection data detected by the non-contact sensor 15a. The calculation portion 35a calculates the passage timing of the center of the detection marker M from the detection data of the passage start time of the detection marker M and the detection data of the passage end time thereof, which are detected by the non-contact sensor 15a. Specifically, the calculation portion 35a calculates the time at which a central portion of the detection marker M passes the detection range, from the time at which the detection marker M enters the detection range of the non-contact sensor 15a and the time at which the detection marker M leaves the detection range of the non-contact sensor 15a.

The calculation portion 35a transmits calculation results to a control portion 50 of the internal combustion engine. The control portion 50 commands, based on the calculation results, a fuel injector (not illustrated) provided in the internal combustion engine to inject fuel. The calculation portion 35a and the control portion 50 may be integrally configured.

### Method for Measuring Phase of Crankshaft

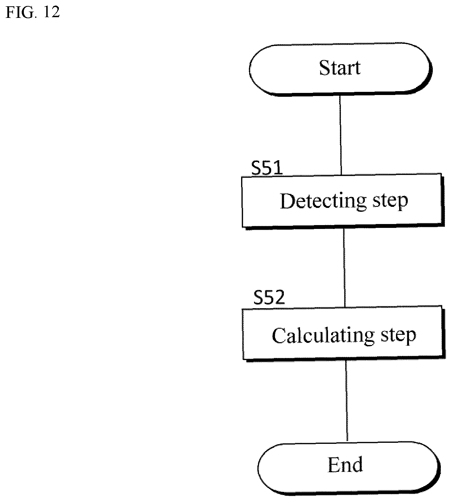

The method for measuring a phase of a crankshaft uses the above-described crankshaft phase measuring device 5 and includes, as illustrated in FIG. 12: a detecting step S51 of detecting, by the non-contact sensor 15a, the passage start time and the passage end time of the detection marker M; and a calculating step S52 of calculating, by the calculation portion 35a, the passage time of the center of the detection marker M from the detection data of the passage start time and the passage end time. It is to be noted that in FIG. 12, "Start" means that the internal combustion engine is started, and "End" means that the internal combustion engine is stopped.

In the detecting step S51, the non-contact sensor 15a detects the passage start time and the passage end time of the detection marker M. That is to say, the detection of the detection marker M by the non-contact sensor 15a is started when the detection marker M enters the detection range of the non-contact sensor 15a, and ended when the detection marker M leaves the detection range of the non-contact sensor 15a.

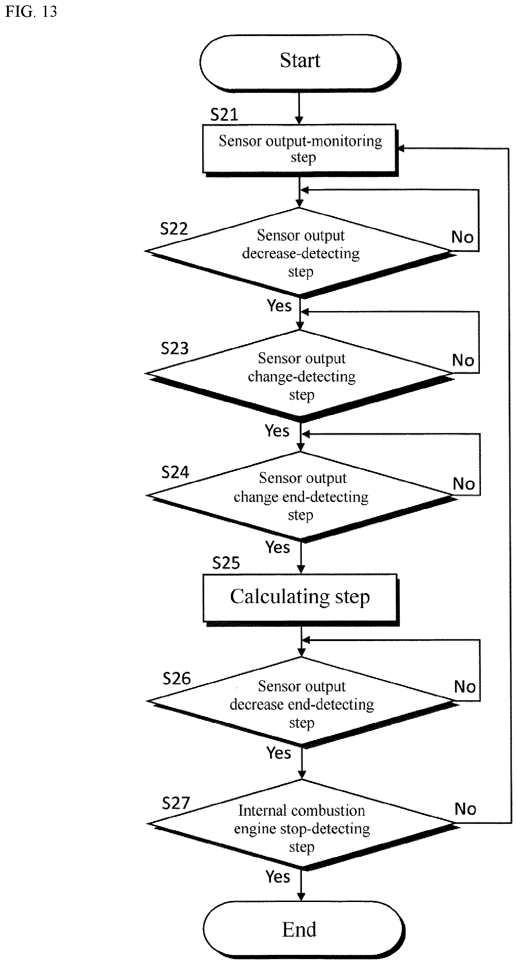

In the calculating step S52, the calculation portion 35a calculates the passage time of the center of the detection marker M from the detection data of the passage start time and the passage end time. Specifically, as illustrated in FIG. 13, the calculating step S52 includes: a step S21 of monitoring the sensor output of the non-contact sensor 15a; a step S22 of detecting a decrease in the sensor output of the non-contact sensor 15a; a step S23 of detecting a change in the sensor output in the non-contact sensor 15a having the decreased sensor output; a step S24 of detecting an end of the change in the sensor output; a step S25 of calculating a position of the center of the detection marker M; a step S26 of detecting an end of the decrease in the sensor output of the non-contact sensor 15a; and a step S27 of detecting a stop of the internal combustion engine.

In the sensor output-monitoring step S21, the calculation portion 35a monitors the sensor output of the non-contact sensor 15a. The monitoring of the sensor output is continuously performed. In other words, the calculation portion 35a constantly monitors the sensor output during the operation of the internal combustion engine.

In the sensor output decrease-detecting step S22, the calculation portion 35a detects a decrease in the sensor output of the non-contact sensor 15a. When the throw portion T enters the detection range of the non-contact sensor 15a, the sensor output of the non-contact sensor 15a is decreased. The calculation portion 35a detects the start of the decrease in the sensor output.

In the sensor output change-detecting step S23, the calculation portion 35a detects a change in the sensor output in the non-contact sensor 15a having the decreased sensor output. When the non-contact sensor 15a, which detects the throw portion T, detects the detection marker M, the sensor output changes. The calculation portion 35a detects the start of the change in the sensor output.

In the sensor output change end-detecting step S24, the calculation portion 35a detects an end of the change in the sensor output. When the detection marker M leaves the detection range of the non-contact sensor 15a, the state in which the sensor output of the non-contact sensor 15a is decreased is recovered. The calculation portion 35a detects the recovery of the state in which the sensor output is decreased, i.e., the detection marker M leaving the detection range of the non-contact sensor 15a.

In the calculating step S25, the calculation portion 35a calculates the position of the center of the detection marker M. Specifically, the passage time of the detection marker M is calculated from the detection of the start and end of the change in the sensor output, and the passage time of the central portion of the detection marker M is calculated based on the calculation results. From the calculation results, the position of the detection marker M and also the position of the throw portion T can be accurately grasped; thus, the phase of the crankshaft S can be measured with high accuracy.

In the sensor output decrease end-detecting step S26, the calculation portion 35a detects an end of the decrease in the sensor output of the non-contact sensor 15a. When the throw portion T leaves the detection range of the non-contact sensor 15a, the decrease in the sensor output of the non-contact sensor 15a is ended. The calculation portion 35a detects the end of the decrease in the sensor output, and the process proceeds to the sensor output-monitoring step S21 again.

In the stop-detecting step S27, the calculation portion 35a detects a stop of the internal combustion engine, whereby the process of measuring the crankshaft is ended.

### Advantages

In the method for measuring a phase of a crankshaft, the detection marker M is jointed to the back chamfer portion T11 in the throw portion T of the crankshaft S, and the non-contact sensor 15a detects the passage of the detection marker M. By calculating, from the detection, the passage of the central portion of the detection marker M, the position of the throw portion T can be accurately specified; thus, the phase of the crankshaft S, in which the influences of torsional vibration and processing errors of the crankshaft S are taken into account, can be measured with high accuracy.

### Other Embodiments

It is to be noted that the present invention is not limited to the above embodiments.

In the above embodiments, the case in which the measuring portions are provided for the respective throw portions on a one-to-one basis and the number of measuring portions agrees with the number of throw portions has been described; however, these portions do not necessarily need to be the same in number. For example, a plurality of measuring portions may be provided for one throw portion. For example, in a diesel engine, the fuel injection may be divided into a plurality of stages. When a plurality of measuring portions are provided for one throw portion, such an engine in which the fuel injection is divided into a plurality of stages can be provided with measuring portions corresponding to the respective stages. Accordingly, it is possible to give optimal timing information to each stage.

In the first embodiment, the case in which the measuring portions and the collecting portion are connected through the signal lines each serving as an electrical contact; however, for example, a relay portion may be provided on the outer face of the crankcase, and the measurement data measured by the measuring portions may be configured to be transmitted via wireless communication from the relay portion to the collecting portion.

In the first to third embodiments, the configuration in which at least a part of the crankshaft protrudes from the crankcase has been described; however, an entirety of the crankshaft may be housed in the crankcase.

In the above embodiments, as the method for measuring a phase of a crankshaft, the method in which in the analyzing step, the phase of each throw portion is independently determined from the measurement data of the throw portion has been described; however, this analysis may be performed in consideration of a correlation between the plurality of throw portions. In this case, by considering the correlation between the plurality of throw portions, a distortion of the crankshaft itself and/or processing errors can be estimated.

In the description of the fifth embodiment, the detection marker is formed of a metal material and provided on the back chamfer portion in the crank arm; however, the configuration is not limited thereto. The detection marker may be provided, for example, by processing a part of the throw portion. Specifically, a surface of the back chamfer portion may be provided with recesses, holes, etc., or a part of the surface of the back chamfer portion may be processed by surface roughening or the like, to use the processed part as the detection marker. The detection marker is not particularly limited as long as it spacially and locally changes electromagnetic characteristics such as conductivity, magnetic permeability, or the like and can be detected by the non-contact sensor.

The position (place) where the detection marker is provided is not limited to the back chamfer portion, and the detection marker may be provided in any part of the crankshaft as long as the rotation of the crankshaft can be detected.

The non-contact sensor may be provided outside the crankcase as long as it can detect the detection marker.

The non-contact sensor, the calculation portion, and the control portion may be electrically connected to one another or may communicate with each other via a wireless communication means.

### EXAMPLES

Hereinafter, Examples of the present invention are described. The present invention is not limited to the Examples below.

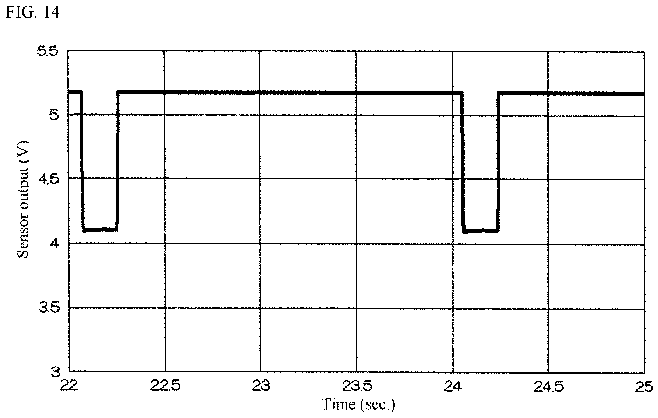

An eddy current displacement sensor was installed so as to approach a rotating throw portion, a crankshaft was rotated at 30 rpm, and an output of the eddy current displacement sensor was subjected to A/D (Analog/Digital) conversion and analyzed to give a waveform in FIG. 14. It can be seen from FIG. 14 that the sensor output is decreased when the eddy current displacement sensor approaches the throw portion. In this manner, owing to the decrease in the sensor output, the state in which the throw portion approaches the eddy current displacement sensor can be clearly distinguished from the state in which the throw portion does not approach the same. However, the sensor output becomes flat during the passage of the throw portion, and thus, it is difficult to accurately grasp the passage timing of any specific point in the throw portion. On the other hand, considering the use of the sensor output for the timing of fuel injection, it is preferable that the phase of the crankshaft can be grasped with an accuracy of 0.1°.

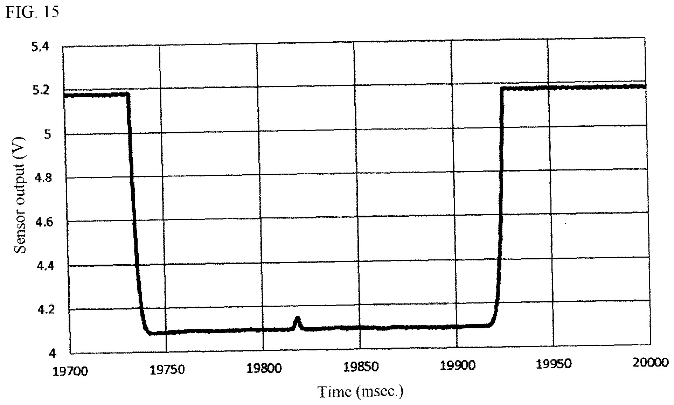

A detection marker which changes the sensor output was provided at an arbitrary point of the back chamfer portion of the crank arm in the throw portion. Specifically, for the experiment, a 10 mm square copper foil having a thickness of 0.08 mm was attached to the back chamfer portion. While monitoring the sensor output, the timing of the passage start of the throw portion was recognized, the passage start (a threshold value was set for a time differential value) of the detection marker was then detected, and the passage timing (time differential value = 0) of the center of the detection marker was detected. The results are shown in FIG. 15. In FIG. 15, a convex part (bump) seen substantially in the middle of the flat part where the sensor output is decreased indicates a change in the sensor output detected by the detection marker.

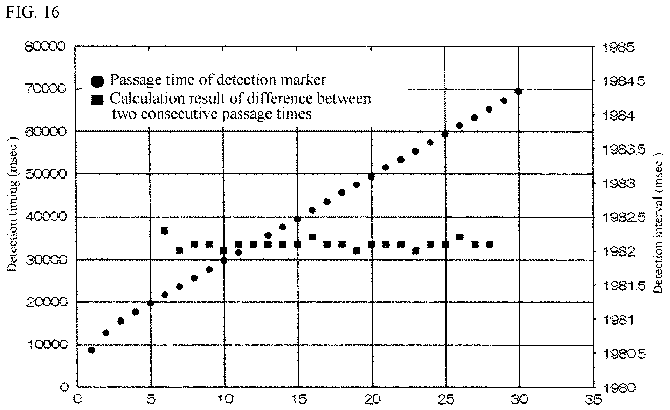

Since some noises are superimposed in the detection of the change in the sensor output, instead of obtaining the differential value between two points as a sampling interval of digital data, the differential value may be calculated using: timing data acquired according to noise situation; and immediately preceding multiple data. FIG. 16 shows experimental results of calculating the passage timing of the center of the detection marker by such an algorithm. In FIG. 16, a circle dot represents the passage time, and a square dot represents a calculation result of a difference between two consecutive passage times. Looking at the difference between the passage times, it is found that all dots are within a range of ±0.5 msec. This value is represented by a statistical value of 1σ ≈ 0.01 deg. when converted into an angle equivalent, and it is found that the passage timing of the center of the detection marker can be detected with extremely high accuracy.

### [INDUSTRIAL APPLICABILITY]

The crankshaft phase measuring device and the method for measuring a phase of a crankshaft of the present invention enable accurately measuring the phase of the throw portion. Furthermore, the method for controlling an internal combustion engine of the present invention uses the method for measuring a phase of a crankshaft of the present invention, and the fuel consumption of the internal combustion engine can be improved. Accordingly, the method for measuring a phase of a crankshaft of the present invention can be suitably used for an internal combustion engine including a crankshaft.

### [EXPLANATION OF THE REFERENCE SYMBOLS]

- 1, 2, 3, 4, 5: Crankshaft phase measuring device
- 10, 12, 14, 15: Measuring portion
- 15a: Non-contact sensor
- 20, 23, 25: Collecting portion
- 30, 35: Analyzing portion
- 35a: Calculation portion
- 40: Relay portion
- 50: Control portion
- X, S: Crankshaft
- X1, S1: Shaft
- X2, T: Throw portion
- X2A: Proximity point
- Y: Crankcase
- T1: Crank arm
- T2: Crankpin
- T11: Back chamfer portion
- M: Marker
- C: Crankcase

## Claims

1. A crankshaft phase measuring device for measuring a phase of a crankshaft comprising a plurality of throw portions, the crankshaft phase measuring device comprising:
a plurality of measuring portions for measuring phases of the respective throw portions;
a collecting portion for collecting measurement data measured by the plurality of measuring portions; and
an analyzing portion for analyzing the measurement data collected by the collecting portion, wherein
an electrically and mechanically discontinuous part exists in a part of a measurement path from each throw portion to the collecting portion, and
the collecting portion is fixed away from the crankshaft so as not to rotate in synchronization with the crankshaft.

2. The crankshaft phase measuring device according to claim 1, wherein
the plurality of throw portions are housed in a hollow crankcase, and
the plurality of measuring portions are arranged in the crankcase.

3. The crankshaft phase measuring device according to claim 2, wherein the collecting portion is disposed outside the crankcase.

4. The crankshaft phase measuring device according to claim 2, wherein the collecting portion is disposed inside the crankcase.

5. The crankshaft phase measuring device according to claim 3, wherein
the plurality of measuring portions are arranged on an inner face of the crankcase, and
the measuring portions and the throw portions are electrically and mechanically discontinuous.

6. The crankshaft phase measuring device according to claim 5, wherein each measuring portion comprises a proximity sensor for specifying the phase of the throw portion.

7. The crankshaft phase measuring device according to claim 3 or 4, wherein
the measuring portions are arranged on the throw portions,
the measurement data of the plurality of measuring portions are configured to be transmitted via wireless communication from the measuring portions to the collecting portion, and
the measuring portions and the collecting portion are electrically and mechanically discontinuous.

8. The crankshaft phase measuring device according to claim 3, wherein at least a part of the crankshaft protrudes from the crankcase,
the crankshaft phase measuring device further comprising a relay portion for relaying collecting the measurement data into the collecting portion,
the plurality of measuring portions are arranged on the throw portions,
the relay portion is disposed at a protruding end of the crankshaft,
the measurement data are configured to be transmitted via wireless communication from the relay portion to the collecting portion, and
the relay portion and the collecting portion are electrically and mechanically discontinuous.

9. The crankshaft phase measuring device according to claim 7, wherein each measuring portion comprises: an acceleration sensor for measuring an acceleration at a position where the throw portion is provided; and a gyroscope sensor for measuring an angular velocity.

10. The crankshaft phase measuring device according to claim 1, wherein
each measuring portion comprises:
a detection marker provided on a throw portion of a crankshaft in an internal combustion engine; and
a non-contact sensor for detecting the detection marker,
the collecting portion receives detection data detected by the non-contact sensor, and
the analyzing portion is a calculation portion for calculating the detection data.

11. A method for measuring a phase of a crankshaft, the method using the crankshaft phase measuring device according to claim 1 and comprising:
measuring a phase of each throw portion;
collecting measurement data measured in the measuring; and
analyzing the measurement data collected in the collecting,
wherein in the analyzing, the phase of each throw portion is independently determined according to the measurement data of the throw portion.

12. A method for controlling an internal combustion engine, the method comprising:
phase-measuring of a phase of a crankshaft by the method for measuring a phase of a crankshaft according to claim 11; and
controlling, based on a measurement result of the phase-measuring, a timing of fuel injection to an engine for driving the crankshaft,
wherein the timing control in the controlling is independently performed for each throw portion based on a phase analysis result of the throw portion.

13. A method for measuring a phase of a crankshaft, the method using the crankshaft phase measuring device according to claim 10,
**characterized in that** the method comprises:
detecting, by the non-contact sensor, a passage start time and a passage end time of the detection marker; and
calculating, by the calculation portion, a passage time of a center of the detection marker from the detection data of the passage start time and the passage end time.

14. The method for measuring a phase of a crankshaft according to claim 13, wherein a detectable region of the non-contact sensor is greater than a detected area of the detection marker in a detection direction of the non-contact sensor.

15. The method for measuring a phase of a crankshaft according to claim 13 or 14, wherein the detection marker is formed by metal plating or formed of a metal thin film and is jointed to the crankshaft.

16. The method for measuring a phase of a crankshaft according to claim 13 or 14, wherein the detection marker is formed by processing a part of the crankshaft.

17. A crankshaft, wherein a throw portion is provided with a detection marker for measuring a phase.

18. An internal combustion engine, wherein the crankshaft according to claim 17 is provided in a crankcase,
the internal combustion engine comprising:
a non-contact sensor for detecting the detection marker;
a calculation portion for calculating by receiving detection data detected by the non-contact sensor; and
a control portion which commands, based on a calculation result of the calculation portion, a fuel injector to inject fuel.
